Europäisches Patentamt

European Patent Office

Office européen des brevets

(11) Publication number: **0 433 795 A1**

# EUROPEAN PATENT APPLICATION

(21) Application number: 90123527.5

(51) Int. Cl.5: **F16G 3/08**

(22) Date of filing: 07.12.90

(30) Priority: **20.12.89 GB 8928778**

(43) Date of publication of application:
**26.06.91 Bulletin 91/26**

(84) Designated Contracting States:
**BE DE FR GB**

(71) Applicant: **DUNLOP-CCT S.A.**
**Boulevard des Combattants 64**
**B-7500 Tournai(BE)**

(72) Inventor: **Letellier, Jacques**
**10 Rue des Ecoles**
**B-7550 Velaines(BE)**

(74) Representative: **Sparrow, Alvar Alfred et al**
**BTR Group Patent & Trade Mark Service P.O.**
**Box 504**
**Erdington Birmingham B24 9QH(GB)**

(54) Clamping of sheet material.

(57) A clamped load-bearing sheet material assembly comprises a sheet material (5,6) secured against slipping between a pair of clamp jaws (1,2) by means comprising at least one row of pins (14) extending through the sheet material and accommodated at each end in a corresponding hole in a jaw, the or each row being aligned transversely of the load-bearing direction of the sheet material.

EP 0 433 795 A1

## CLAMPING OF SHEET MATERIAL

This invention relates to clamping of sheet material.

The invention is especially useful for clamping sheet material which is subjected to high longitudinal pulling stress or load-bearing in use. It is desirable to clamp such sheet material in a manner to minimise the risk of the material slipping at the clamp site. This invention is particularly useful for minimising this risk in respect of flexible load-bearing fabric sheet material or flexible fabric-reinforced sheet material such as fabric sheet impregnated and/or coated and/or laminated with a polymeric composition such as an elastomeric or plastics composition, for instance, belting material having a woven fabric carcass.

One advantageous use of the invention is in elevator belting wherein the ends of the belting are clamped together. Elevator belting is conveyor belting used for conveying goods up an incline, even vertically, and may have buckets or other goods-holding means connected to it. Another advantageous use of the invention is in slings for use in crane-lifting of goods, wherein each end of the sling sheet material, which may be similar to belting material, has clamped to it a ring, hook or other means for location on the hook of a crane. A typical belting or sling clamp comprises two jaw plates which are assembled one each side of the belting or sling sheet material and are secured to the sheet material by means such as bolts passing through pre-formed holes in the assembly. The present invention provides means for strengthening the clamping of sheet material against slipping of the sheet material at the clamp site.

According to the present invention, there is provided a clamped load-bearing sheet material assembly which comprises a sheet material secured against slipping between a pair of clamp jaws by means comprising at least one row of pins extending through the sheet material and accommodated at each end in a corresponding hole in a jaw, the or each row being aligned transversely of the load-bearing direction of the sheet material.

According to the present invention also, there is provided a clamping means for use in a clamped load-bearing sheet material assembly defined in the immediately preceding paragraph, comprising a pair of clamp jaws each jaw having at least one row of corresponding holes, and pins dimensioned for extending through the sheet material and for accommodation at each end in a corresponding jaw hole.

Sheet material for which the invention is particularly suitable comprises load-bearing woven fabric such as is employed in belting. The fabric may comprise textile and/or metal (such as steel) filaments (typically yarns, cords or cables) and may be single- or multi-ply. The invention is especially advantageous for sheet material comprising solid-woven fabric.

The clamp jaws, which normally are separate, may be in substantially plate-like form. Typically, they are of metal, for instance aluminium or steel, stainless steel being preferred for corrosive environments.

The clamping means may have, in addition to the pins and pin-accommodatable holes, a retaining means for further retention of the clamp jaws firmly about the sheet material. The retaining means usually comprises one or more bolts passing through pre-formed bores in the jaws and in the sheet material therebetween. The bolt may be retained by a nut or screw-threaded bore in the jaw remote from the bolt head. Alternative retaining means may be employed if desired, for instance one or more C-clamps.

The jaws of the clamp of the invention have at least one row of holes to accommodate the ends of the pins. The jaws may have several rows of pin-accommodatable holes, providing a multi-purpose clamp of which only some of the holes need to be utilised depending on the requisite strength of the clamped assembly. The holes preferably are arranged in a regular pattern. When there is more than one row of holes, the holes of adjacent rows in a jaw preferably are in staggered relationship. The or each row of pins is aligned transversely of, and usually substantially at right-angles to, the load-bearing direction of the clamped sheet material, i e the direction of greatest pulling stress on the clamped sheet material under its conditions of use.

The jaws also may have several bolt bore-holes for the clamp retaining means and these may be aligned nearer the transverse edges of the jaws with one or more rows of pin-accommodatable holes between them. The pin-accommodatable holes may extend completely through both jaws, or at least some of the holes in one or both jaws may terminate within the jaw.

According to a preferred embodiment of the invention, when two sheet material portions (which may be two portions of the same sheet material) are to be clamped together, an intermediate plate is employed between the two sheet portions at the clamp site. The intermediate plate has pin-accommodatable through-holes and, if appropriate, bolt-accommodatable bores corresponding to any bolt-holes present and used in the clamp jaws. The plate may be employed for enhancement of stiffness to strengthen the clamp site and suitably is a rigid plate such as of metal, for instance steel or aluminium.

The pins (dowels or nails) employed to secure the sheet material against slipping at the clamp site should have a good shear strength sufficient to take the stress to which the sheet material will be subjected in use. A suitable pin material is steel. Preferred pins have a pointed end so that they can penetrate through the sheet material between the clamp jaws without damaging the load-bearing properties of the sheet material and without requiring pin-accommodatable holes to be pre-formed through the sheet material. Alternatively, blunt-ended pins may be employed, in which case pin-accommodatable holes usually would need to be pre-formed through the sheet material, for instance by punching. The pins may have a flattened head at one end to facilitate insertion and/or retention in the assembly. The pins may be inserted all from one side of the clamp or some from each side of the clamp. If desired, the pins may be secured to the clamp jaw receiving the pointed or blunt end, for example by producing a head or turn on the protruding pin end, such as by hammering, or by means of co-operating screw-threads on the pin and the wall of the clamp jaw hole, to provide additional security against dislocation of the pins under the effect of vibration of the clamped assembly during use. Such additional securement may be preferred in the absence of the bolt or other retaining means referred to above.

Suitably the pins and corresponding pin-accommodatable holes have relatively small diameters. Pin diameters may be, for instance, in the range 1 to 10 mm and preferably the pins form a tight fit in the pin-accommodating holes, for instance the hole diameter may be up to about 1% greater than the pin diameter. The pins preferably are closely spaced, for instance the pins may constitute from 5% to 35% of a row length, with a preferred minimum distance of about 2 mm (especially about 2.2 mm) between adjacent pin centres. The surface area of the clamp site may have, for instance, from 50 to 300 pins per m$^2$.

It may not be necessary to fit pins in all of the holes present in the clamp jaws and intermediate plate; the clamp jaws and/or the intermediate plate may have a large number of holes which may be selected for pinning according to the particular sheet material and its use. The number of rows of holes utilised for pinning normally will depend on the requisite strength rating of the clamping, for instance from 1 to 4 rows of holes may be utilised.

Embodiments of the invention are illustrated, by way of example only, in the accompanying drawings, in which:-

Figure 1    is a partly cut-away perspective diagram showing a clamping assembly joining together two ends of sheet material, suitable for use in elevator belting; and

Figure 2    is a partly cut-away perspective diagram showing a clamping assembly at one end of a sheet material, suitable for use in a sling.

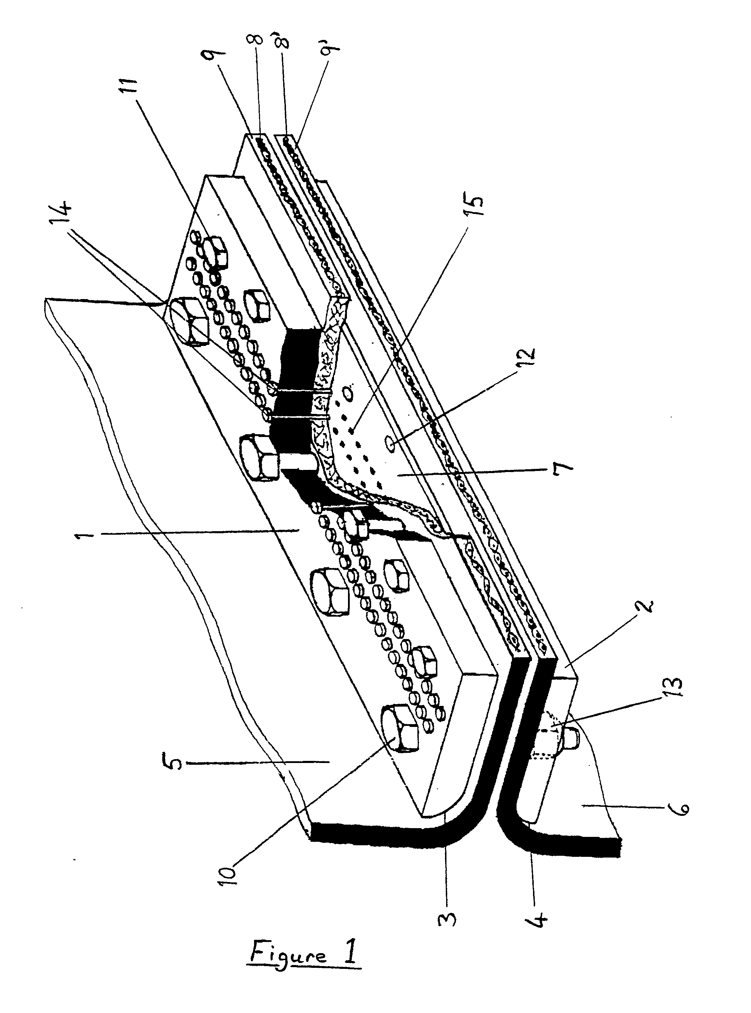

With reference to Figure 1, the clamping assembly comprises a pair of clamp jaws (1,2) each having a bevelled edge (3,4) to provide a curved surface for the respective upturning and downturning of the main portions of sheet material (5,6) having end portions within the jaws (1,2), and an intermediate plate (7) in line with the jaws and separating the belting end portions. The sheet material comprises a single-ply fabric reinforcement (8,8') embedded in a tough elastomeric or plastics composition (9,9'). Retaining means in the form of bolts (heads of which are denoted by 10,11) extend through pre-formed bores (12) in the intermediate plate (7), the jaws (1,2) and the sheeting material end portions, and at least the larger bolts (10) are secured by nuts (13). Two rows of pins (14), in staggered relationship, extend through corresponding holes in the jaws and in the intermediate plate (a hole of which is denoted by 15), and penetrate through the sheet material end portions.

The assembly may be produced by: locating the sheet material portions and the intermediate plate (7) between the clamp jaws (1,2); inserting the bolts (10,11) through the pre-formed aligned bore-holes (12) in the intermediate plate, the jaws and the sheet material end portions; tightening the nuts (13) onto the bolts; positioning the pointed ends of the pins (14) in the pin-accommodatable holes in the upper jaw (1); and forcing (such as by hammering) the pins through the sheet material end portions and into the corresponding holes in the lower jaw (2).

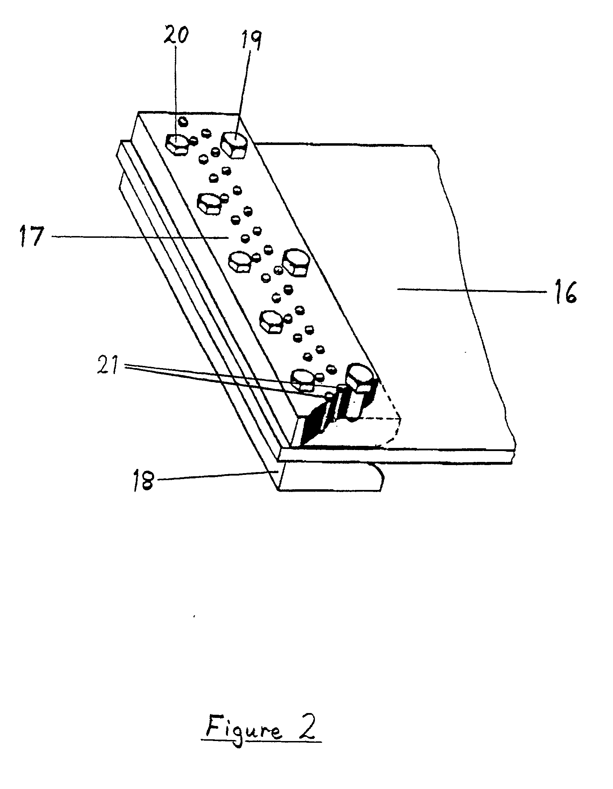

Figure 2 shows a single end portion of a sheet material (16) clamped between clamp jaws (17,18) by bolts (19,20) the shafts of which extend through preformed bores in the jaws (17,18) and in the end portion of the sheet material (16), and two rows of pins (21) in staggered relationship accommodated in corresponding holes in the jaws (17,18) and extending through the sheet material end portion.

The assembly may be produced by a procedure similar to that described above with reference to Figure 1 except that there is only one sheet material end portion and there is no intermediate plate.

The opposite end portion of the sheet material of Figure 2 may be clamped in a similar manner and, for use of the sheet material as a sling, the clamps may comprise a ring or hook for location of the hook of a crane.

It will be appreciated that the bolts and bolt bores of Figures 1 and 2 may be omitted if desired, as hereinbefore described.

## Claims

1. Clamped load-bearing sheet material assembly which comprises a sheet material (5,6 or 16) secured against slipping between a pair of clamp jaws (1,2 or 17,18) by means comprising at least one row of pins (14 or 21) extending through the sheet material and accommodated at each end in a corresponding hole in a jaw, the or each row being aligned transversely of the load-bearing direction of the sheet material.

2. Assembly according to Claim 1 wherein the sheet material comprises load-bearing woven fabric of the kind employed in conveyor belting or slings.

3. Assembly according to Claim 1 or 2 wherein the clamp jaws are of separate substantially plate-like form.

4. Assembly according to any of the preceding Claims wherein the jaws have more than one row of pin-accommodatable holes, the holes of adjacent rows being in staggered relationship.

5. Assembly according to any of the preceding Claims comprising also one or more bolts (10,11 or 19,20) accommodated in pre-formed bores in the jaws and sheet material.

6. Assembly according to any of the preceding Claims wherein two sheet material portions are clamped together and comprising an intermediate plate (7) between the two sheet portions at the clamp site, the intermediate plate having pin-accommodatable through-holes (15) and, if appropriate, bolt-accommodatable bores, corresponding to the holes used in the clamp jaws.

7. Assembly according to any of the preceding Claims wherein the pins have diameters in the range 1 to 10 millimetres.

8. Assembly according to any of the preceding Claims wherein the aggregate diameters of pins in a row constitute from 5% to 35% of the row length and the minimum distance between pin centres in a row is about 2 millimetres.

9. Assembly according to any of the preceding Claims wherein the number of pins employed is at the rate of from 50 to 300 per square metre of clamp site surface area.

10. Assembly according to any of the preceding Claims when employed in elevator belting.

11. Clamping means for use in a clamped load-bearing sheet material assembly as defined in any of the preceding Claims, comprising a pair of clamp jaws (1,2 or 17,18) each jaw having at least one row of corresponding holes, and pins (14 or 21) dimensioned for extending through the sheet material and for accommodation at each end in a corresponding jaw hole.

Figure 1

Figure 2

6

European
Patent Office

EUROPEAN SEARCH
REPORT

Application Number

EP 90 12 3527

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | EP-A-0 065 478 (REXNORD)<br>* Page 3, line 7 - page 5, line 7; figures 1-7 * | 1,3,4,5,6,<br>10,11 | F 16 G 3/08 |
| A | EP-A-0 221 818 (CAOUTCHOUC MANUFACTURE ET PLASTIQUES)<br>* Claim 1 * | 2,5,6,10 | |

TECHNICAL FIELDS
SEARCHED (Int. Cl.5)

F 16 G
B 66 C
B 65 G

The present search report has been drawn up for all claims

| Place of search | Date of completion of search | Examiner |
|---|---|---|
| The Hague | 22 March 91 | BARON C. |